# FASCICULE DE BREVET EUROPEEN

(11) **EP 2 975 517 B1**
(45) Date de publication et mention de la délivrance du brevet: **08.12.2021**
(21) Numéro de dépôt: 15174627.8
(22) Date de dépôt: 30.06.2015
(51) Int. Cl.: G06F 9/48, G06F 11/16, G06F 11/20, G06F 11/14

(54) **PROCÉDÉ ET DISPOSITIF D'EXÉCUTION SYNCHRONISÉE D'UNE APPLICATION DANS UN ENVIRONNEMENT À HAUTE DISPONIBILITÉ**
VERFAHREN UND VORRICHTUNG ZUR SYNCHRONISIERTEN AUSFÜHRUNG EINER ANWENDUNG IN EINER UMGEBUNG MIT HOHER VERFÜGBARKEIT
METHOD AND DEVICE FOR SYNCHRONISED EXECUTION OF AN APPLICATION IN A HIGH-AVAILABILITY ENVIRONMENT

(30) Priorité: 01.07.2014 FR 1456274
(43) Date de publication de la demande: 20.01.2016
(73) Titulaire: BULL SAS, 78340 Les Clayes sous Bois (FR)
(72) Inventeur: LECOURTIER, Georges, 78000 Versailles (FR)
(74) Mandataire: Cabinet Camus Lebkiri

(56) Documents cités:
- EP-A1- 2 709 010
- WO-A1-93/09494
- Martin Kriegel: "Bounding Error Detection Latencies for Replicated Execution", , 27 juin 2013 (2013-06-27), pages 1-66, XP055175263, Extrait de l'Internet: URL:http://citeseerx.ist.psu.edu/viewdoc/d ownload?doi=10.1.1.395.1114&rep=rep1&type= pdf [extrait le 2015-03-10]

## Description

### DOMAINE TECHNIQUE DE L'INVENTION

La présente invention a pour objet un procédé et un dispositif d'exécution synchronisée d'une application dans un environnement à haute disponibilité. La présente invention a essentiellement pour but d'améliorer la résilience de l'environnement. La résilience se définit comme l'aptitude d'un système à survivre à un certain nombre de défaillances et à permettre sa réparation sans provoquer d'interruption de service.

Le domaine de l'invention est, d'une façon générale, celui des systèmes de traitement de l'information ou de la communication, et plus particulièrement, celui des systèmes de production informatique utilisant des serveurs à haute disponibilité.

### ARRIERE-PLAN TECHNOLOGIQUE DE L'INVENTION

Les systèmes informatiques connus sont tous soumis à des pannes d'origine matérielle ou logicielle qui affectent à des instants aléatoires leur fonctionnement général. Lorsqu'un de ces systèmes gère des fonctions critiques sur le plan de la sécurité des biens ou des personnes, le comportement du système électronique en présence d'une panne devient un élément déterminant de la fiabilité globale perçue par les utilisateurs. Ce comportement définira la classe de résilience du système. Il est totalement dépendant des choix techniques effectués au moment de la conception du système car il s'appuie sur des redondances au niveau matériel qui impliquent toujours un certain coût. La classe de résilience est donc le résultat d'un compromis entre la minimisation du coût et la maximisation de la disponibilité.

Plusieurs types de solutions ont été développées pour satisfaire au mieux les exigences de résilience en termes de matériel. Quatre classes de pannes de composants matériels et trois classes de pannes de composants logiciels peuvent être prises comme exemples significatifs des évènements affectant le fonctionnement d'un ordinateur.

Les quatre classes de composants matériels examinées sont les mémoires, les circuits d'entrée-sortie, les alimentations et composants de refroidissement, et les processeurs.

### Mémoires

Les mémoires sont parmi les composants dont la fiabilité brute est la plus mauvaise à cause de la miniaturisation très élevée des points mémoire qui deviennent ainsi très sensibles aux défauts de fabrication et aux perturbations d'origines diverses affectant leur environnement. Fort heureusement, ces problèmes sont étudiés de très longue date et tout un arsenal de mesures, comme par exemple les codes correcteurs d'erreurs, visent à permettre aux mémoires d'offrir une fiabilité opérationnelle acceptable.

### Entrées-sorties

Les pannes d'entrée-sortie se caractérisent par une ou plusieurs erreurs détectées dans un protocole ou dans un paquet de données échangées entre deux systèmes. La vaste majorité de ces erreurs a pour origine l'environnement électromagnétique de la transmission (bruits, ...) et le problème est résolu par une nouvelle tentative (« retry » en anglais) de la transaction d'entrée-sortie. Dans les cas où la liaison est physiquement interrompue par une panne matérielle de circuit (câble, connecteur, laser, ...), la résilience est habituellement apportée par un canal de redondance d'entrée-sortie qui offre un passage alternatif aux données, que ce passage soit direct entre les deux systèmes ou bien relayé à travers un réseau informatique.

### Alimentations et composants de refroidissement

Dans un système à haute disponibilité, les alimentations secteur et les ventilateurs ou pompes hydrauliques sont toujours redondants. Une panne de l'un quelconque de ces composants n'affecte donc pas les applications utilisateur. La réparation est effectuée par un échange à chaud de l'alimentation ou du dispositif de refroidissement.

A l'opposé, les alimentations de niveau le plus bas, encore appelées POL pour « Point Of Load » en anglais, qui fournissent directement la puissance aux processeurs, aux mémoires ou aux circuits d'entrée-sortie, ne sont généralement pas redondantes et sont soudées sur la carte mère pour des questions de coût, d'encombrement et de performances. L'arrêt de ces types de composants est donc fatal pour les composants fonctionnels qui leurs sont directement attachés. Les défaillances de POL seront donc assimilées à des pannes de composants fonctionnels.

### Processeurs

Les processeurs sont dans une classe à part car leurs pannes sont d'origines multiples et demandent à être explicitées.

Les processeurs des systèmes critiques supportant en général une architecture multi-cœurs, on se placera dans cette hypothèse.

Pour assurer la résilience des processeurs, on utilise encore une fois la redondance de matériel. Ici, le matériel est le support direct de l'exécution des logiciels système et applications. Dupliquer un processeur applicatif entraîne le besoin de synchroniser le processeur de premier plan, celui qui interagit avec les utilisateurs, et le ou les processeurs de second plan, qui viendront remplacer, à la volée, le processeur de premier plan au moment où il sera victime d'une défaillance.

Dans l'art antérieur, et pour des processeurs assez simples, une solution consistait à tripler sur une même carte ou dans un même circuit intégré les fonctions de calcul et à ajouter un circuit de comparaison des résultats basé sur les états des bus communs d'entrée-sortie et de mémoire. La largeur de ces bus pouvait atteindre 128 bits de données et 32 bits d'adressage. A l'échelle de chaque cycle machine, typiquement entre 1 et 10ns, le circuit de comparaison délivrait un statut de cohérence basé sur un principe de vote majoritaire : l'état correct est celui qui est présent dans au moins deux des trois processeurs. Dès qu'une erreur était détectée dans le processeur de premier plan, ou que le circuit de comparaison indiquait que le bus de ce processeur était différent de celui des deux autres bus, le processeur de premier plan était arrêté et l'exécution continuait sur le premier processeur de second plan. Les éventuelles pannes des processeurs de second plan étaient reportées et entraînaient un passage en mode dégradé, en attente de l'échange de la carte processeur. Comme l'échange de cette carte impliquait l'arrêt du service, il fallait auparavant déplacer les applications sur un système de secours équivalent qui, en principe, ne devait avoir aucun élément matériel en commun avec le système principal. La durée de cette récupération pouvait affecter gravement la disponibilité du service si le volume des informations à déplacer était important. Si on souhaitait s'affranchir de cette contrainte, il fallait prévoir trois cartes processeur distinctes dans la même armoire ou le même châssis, mais malheureusement, le circuit de comparaison des résultats entraînait très rapidement une limitation de performances à cause de la vitesse limitée de propagation des signaux électriques ou optiques. Ce mode est donc à la fois cher et peu performant, surtout si l'on envisage la mise en œuvre de sockets muiti-cœurs standard qui n'incorporent pas les fonctions de comparaison des états des bus à l'extérieur du socket.

Ainsi, dans l'art antérieur, les solutions au problème de haute disponibilité ne couvrent pas sans dégradation significative de performances les pannes des processeurs eux-mêmes.

Les trois classes de composants logiciels à l'origine de problèmes de fiabilité sont les sections critiques des hyperviseurs et des systèmes d'exploitation, les défauts des drivers d'entrée-sortie et des firmwares (c'est-à-dire des micrologiciels) embarqués dans les matériels, et les défauts des applications.

### Sections critiques

Une ressource critique est un ensemble de données ou d'instructions exécutables protégées par un verrou logiciel. Une section critique est la suite d'instructions à laquelle un cœur d'exécution fait appel pour utiliser une ressource critique. Il est bien connu que le verrou logiciel qui protège contre l'exécution simultanée d'une même section critique par plus d'un cœur utilise une instruction spéciale de type « Test-And-Set » mettant en œuvre un dispositif matériel spécifique dans les processeurs et les contrôleurs de la mémoire cache. En sortie d'une section critique, le processus tournant sur le cœur d'exécution en question doit libérer la ressource critique en replaçant le verrou logiciel dans un état dit ouvert.

Il est commun dans des programmes multitâches fonctionnant sur des systèmes de type multiprocesseur symétrique, encore appelé SMP pour « Symetric MultiProcessing » en anglais, disposant de plusieurs cœurs et partageant la même mémoire, de créer des interblocages, encore appelés « deadlocks » en anglais, à cause d'une gestion erronée des ressources critiques. Les systèmes d'exploitation sont heureusement largement débarrassés de ces deadlocks grâce à des tests intensifs mais les applications utilisateurs sont souvent affectées par de tels problèmes. Il appartient alors aux systèmes d'exploitation d'être capables de libérer les ressources bloquées par un deadlock utilisateur en préemptant le cœur et en suspendant l'exécution du processus en défaut. Toutefois, si un hyperviseur crée de lui-même un tel deadlock, aucun processus logiciel ne pourra le débloquer et un tel défaut est assimilable à une panne matérielle pouvant affecter les données utilisateur.

### Drivers d'entrées-sorties et firmwares

Les drivers d'entrées-sorties et firmwares sont caractérisés par leur contact étroit avec le matériel et leur niveau d'optimisation élevé vis à vis des performances temps réel. Chaque évolution du matériel peut nécessiter une mise à jour de ces logiciels s'ils ne sont pas embarqués en dur dans les cartes électroniques, mais comme les situations de défaut n'apparaissent que dans des conditions très rares, il est commun d'exécuter un firmware ou un driver dans une version périmée.

### Défauts applicatifs

Les applications gérées par un système d'exploitation, encore appelées OS pour Operating System en anglais, sont soumises aux procédures de cet OS et sont en général arrêtées ("killées") si elles se retrouvent en deadlock en utilisant 100% de la puissance d'un cœur de processeur. Les autres défauts, ceux qui ne bloquent pas une ressource critique du système, correspondent à des erreurs de logique de l'application affectant l'exactitude des résultats et ne concernent pas la présente invention.

Si un hyperviseur est présent dans le système, il agit comme un "super-OS" et le ou les OS tournant sous cet hyperviseur, appelés OS guest, sont isolés du matériel et aussi les uns des autres. Dans ce cas on peut dire qu'un OS guest est similaire à une application sous OS. En particulier l'hyperviseur est capable de "killer" (on parle en effet de tuer un processus), de redémarrer ("resetter") ou de déplacer un OS complet avec ses applicatifs d'un système à un autre à travers des ressources réseau. Le temps de déplacement, appelé aussi migration, dépend bien entendu de la bande passante de ce réseau.

Par ailleurs, dans l'état de la technique on connait le document WO 93/09494 A1 qui décrit un dispositif pour améliorer le synchronisme de réception des événements d'entrées/sorties dans deux programmes d'ordinateur, l'un étant le double de l'autre. Le document "Bounding Error Détection Latencies for Replicated Execution", Martin Kriegel, 27 juin 2013, pages 1-66, décrit un contexte classique d'exécution double ou triple afin de procéder à des comparaisons d'exécution et ce pour déterminer un dysfonctionnement d'une ou plusieurs exécutions. Le document EP 2709010 A1 aborde la synchronisation de deux programmes d'ordinateur différents.

Pour ne pas alourdir l'exposé, les pannes d'origine logicielle ne seront pas abordées de manière extensive, bien qu'elles puissent être une cause majeure de défaillance. La réparation de ces pannes logicielles est basée sur l'installation de nouvelles versions de software ou de firmware. Normalement, si le système a été bien conçu, ces installations peuvent être réalisées à distance, sans intervention physique sur le matériel. Le rare cas où une panne logicielle implique un accès direct est celui d'un défaut dans le firmware de démarrage, encore appelé firmware de bootstrap en anglais, c'est à dire dans le code qui sert à mettre à jour les autres softwares ou firmwares. Il est traité en général par une double version de code : la version dite usine et la version dite utilisateur. La seule version qui suit les évolutions de maintenance est la version utilisateur. La version usine est protégée en écriture et donc permet à tout moment de régénérer la configuration du système. Resteront donc les pannes de la mémoire de bootstrap elle-même, qui font partie des cas traités dans l'analyse qui suit.

### DESCRIPTION GENERALE DE L'INVENTION

L'invention a notamment pour but de remédier aux problèmes qui viennent d'être exposés. En effet l'invention vise à minimiser le temps d'indisponibilité des serveurs.

A cet effet, l'invention propose un procédé d'exécution synchronisée d'une application dans un environnement de haute disponibilité comportant une pluralité de modules de calcul interconnectés par un réseau à très haut débit, caractérisé en ce qu'il comporte les étapes suivantes :
- configuration de la pluralité de modules en une pluralité de partitions dont au moins :
   ∘ deux partitions d'exécution comportant des nœuds identiques en nombre et en caractéristiques, une partition d'exécution principale, et une partition d'exécution secondaire ;
   ∘ une partition de contrôle comportant au moins un module ;
- exécution de l'application sur chaque partition d'exécution, des entrées-sorties traitées par la partition principale étant transmises à la partition d'exécution secondaire via la partition de contrôle qui journalise ces entrées-sorties comme des transactions distribuées entre la partition d'exécution principale et la partition d'exécution secondaire,
- synchronisation des exécutions sur la partition principale et sur la partition secondaire par la numérotation des changements de contexte microprocesseur, sur la partition principale et la partition secondaire, un écart temporel correspondant à la différence entre les numéros de contexte courants, sur les partitions d'exécution principale et secondaire, devant être inférieur à une valeur donnée ;
- transmission d'un signal d'erreur catastrophique à la partition de contrôle, ledit signal étant caractéristique d'une défaillance dans un module d'une partition d'exécution ;
- poursuite de l'exécution en passant dans un mode dit mode dégradé, l'exécution continuant sur une seule partition, et dans le cas d'une défaillance d'un module de la partition d'exécution principale, opération de basculement, la partition d'exécution secondaire devenant la nouvelle partition d'exécution principale.

Le procédé selon l'invention peut comporter, en plus des étapes principales qui viennent d'être mentionnées dans le paragraphe précédent, une ou plusieurs caractéristiques supplémentaires parmi les suivantes :
- on force une interruption à une fréquence prédéterminée, pour forcer un changement de contexte microprocesseur et ainsi procéder à une synchronisation ;
- la fréquence prédéterminée est de l'ordre de 20Hz, la désynchronisation étant ainsi bornée à 50ms ;
- l'application est virtualisée via un hyperviseur ;
- les machines virtuelles sont identiques sur la partition d'exécution principale et sur la partition d'exécution secondaire, les machines virtuelles s'exécutant sur un seul cœur de processeur ;
- l'étape de configuration de la pluralité de modules en une pluralité de partitions s'effectue de manière dynamique, sans arrêt de service de l'environnement ;
- l'indisponibilité apparente de l'environnement est égale à la désynchronisation entre l'exécution de l'application sur les partitions principale et secondaire, l'indisponibilité étant donc bornée par la synchronisation des exécutions.

En outre, l'invention propose un dispositif de stockage numérique comportant un fichier correspondant à des codes instructions mettant en œuvre le procédé selon l'invention.

L'invention propose également un dispositif mettant en œuvre le procédé selon l'invention.

L'invention propose également un dispositif mettant en œuvre le procédé selon l'invention et comportant une combinaison possible des caractéristiques suivantes :
- le dispositif comporte une pluralité de modules insérés dans un châssis caractérisé en ce qu'une embase d'un module comporte des guides d'insertions fixés à l'embase ces guides étant de deux types :
   ∘ un premier type, pour assurer un guidage final et une protection d'un connecteur de l'embase,
   ∘ un deuxième type ayant une forme cylindrique terminée par un cône pour assurer un guidage initial.
   chaque guide ayant un moyen correspondant dans le châssis ;
- le premier type a une forme cylindrique terminé par un cône, sa longueur étant inférieure à celle du deuxième type de l'ordre du centimètre ;
- le premier type est une pièce évidée apte à coopérer avec une forme cylindrique terminée par un cône ;
- au moins 1 guide du deuxième type est rigidement fixé à l'embase ;
- au moins un guide du premier type est fixé de façon flottante à l'embase ;
- au moins un guide cylindrique coopérant avec le guide du premier type est fixé de façon flottante au châssis ;
- l'embase comporte quatre guides du premier type et deux guides du deuxième type ;
- les guides sont répartis symétriquement par rapport à des axes de symétrie de l'embase.

L'invention et ses différentes applications seront mieux comprises à la lecture de la description qui suit et à l'examen des figures qui l'accompagnent.

### DESCRIPTION DES FIGURES

Celles-ci ne sont présentées qu'à titre indicatif et nullement limitatif de l'invention. Les figures montrent :
- à la figure 1, une architecture logique permettant la mise en œuvre du procédé selon l'invention ;
- à la figure 2, une représentation de différentes étapes du procédé selon l'invention ;
- à la figure 3, une illustration d'un élément d'un dispositif mettant en œuvre l'invention ;
- à la figure 4, une illustration d'un bloc connecteur avec flottement coté module ;
- à la figure 5, une illustration d'une mise en œuvre de l'invention avec flottement coté châssis.

### DESCRIPTION DETAILLEE D'UN EXEMPLE ILLUSTRANT L'INVENTION

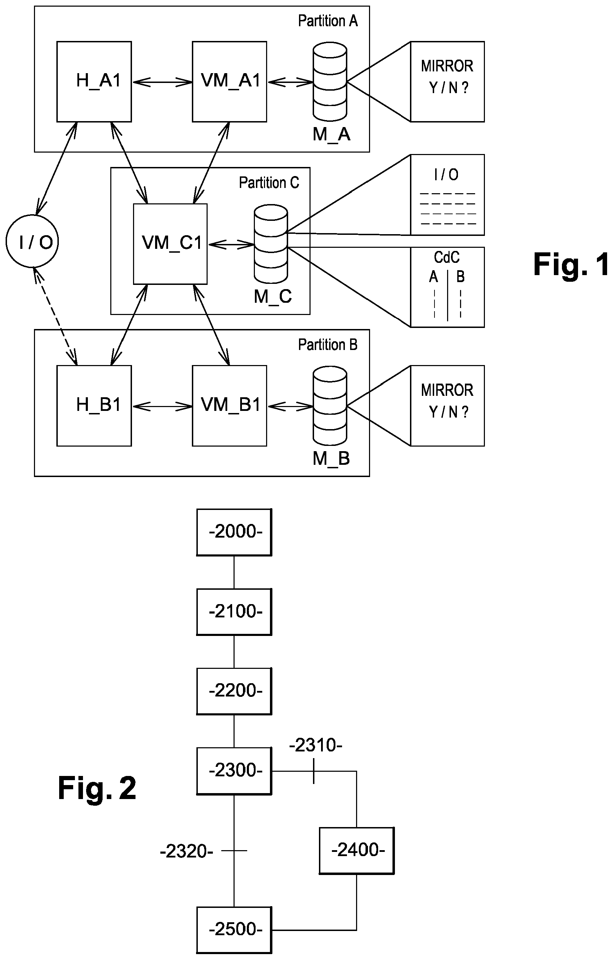

La figure 1 montre un exemple d'architecture logique permettant la mise en œuvre du procédé selon l'invention. Il sera décrit plus loin un mode de matérialisation de cette architecture virtuelle sur une architecture matérielle connue.

La figure 1 montre deux partitions identiques, une première partition A et une deuxième partition B, chacune comportant un hyperviseur H et une machine virtuelle VM.

Un hyperviseur, aussi appelé un moteur de virtualisation, est un ensemble de code instructions qui émule, pour une machine virtuelle, une architecture matérielle. Parmi les plus connus on cite : KVM, HyperV et VMWare.

Une machine virtuelle, appelée VM pour « Virtual Machine » en anglais, est principalement composé d'un fichier de configuration qui décrit des ressources (microprocesseur, disque, périphériques d'entrée/sortie...) qui doivent être virtualisées par un hyperviseur.

En outre, chacune des partitions A et B comporte des moyens de stockage M où sont enregistrés des codes instructions correspondant à un hyperviseur selon l'invention et des fichiers correspondant à des machines virtuelles (configuration, statut, notamment l'état du processeur, disque virtuel, ...).

La figure 1 montre des périphériques d'entrées-sorties I/O connectés à la première partition A via l'hyperviseur H_A1 de la première partition A. Les partitions A et B étant identiques, la figure 1 montre que les périphériques d'entrées-sorties I/O peuvent être connectés à la deuxième partition B via l'hyperviseur H_B1 de la deuxième partition. Cette possibilité est une connexion potentielle qui est établie dans certaines circonstances explicitées plus loin.

L'une de ces deux machines virtuelles des partitions d'exécution est définie, par exemple dans le fichier de configuration, en tant que miroir de l'autre. Dans notre exemple c'est la partition secondaire qui est considérée comme un miroir.

La figure 1 montre également une troisième partition C comportant une machine virtuelle VM_C1 et des moyens de stockage M_C. La machine virtuelle VM_C1 de la troisième partition C journalise dans un fichier les entrées-sorties de la première partition A et les transmet à la deuxième partition B. De plus, la machine virtuelle VM_C1 de la troisième partition trace avec des numéros des changements de contexte (Fig.1 CdC) de l'hyperviseur H_A1 de la première partition A et de l'hyperviseur H_B1 de la deuxième partition afin de synchroniser des machines virtuelles.

Dans un mode préféré de réalisation selon l'invention, avant le lancement des machines virtuelles, la machine virtuelle de la deuxième partition est obtenue par copie de la machine virtuelle de la première partition, ce qui garantit des machines virtuelles synchronisées au démarrage.

Lorsque l'on prête une action à un dispositif, matériel ou virtuel, celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés.

La figure 2 montre des étapes du procédé selon l'invention. En particulier la figure 2 montre une étape 2000 de configuration d'une pluralité de modules en une pluralité de partitions dont au moins :
- deux partitions d'exécution comportant des nœuds identiques en nombre et en caractéristiques, une partition d'exécution principale, et une partition d'exécution secondaire ; Dans notre exemple la partition d'exécution principale est la première partition A, la partition d'exécution secondaire est la deuxième partition B ;
- une partition de contrôle comportant au moins un module ; Dans notre exemple la partition de contrôle est la troisième partition C.

Dans un mode de réalisation on installe sur chaque partition d'exécution un hyperviseur et une machine virtuelle sur laquelle on installe l'application à exécuter.

Lors d'une étape 2100, suivant l'étape 2000 de configuration, on exécute une même application sur la partition d'exécution principale A et sur la partition d'exécution secondaire B. Il s'agit d'une étape d'exécution. Des entrées-sorties traitées par la partition d'exécution principale A sont transmises à la partition d'exécution secondaire B via la partition de contrôle C qui journalise ces entrées-sorties comme des transactions distribuées entre la partition d'exécution principale A et la partition d'exécution secondaire B.

La transaction est dîtes distribuée car elle n'est validée que si les opérations ont été correctement menées à termes sur les deux partitions A et B. Une étape 2200 de synchronisation assure une synchronisation des exécutions entre la partition principale A et la partition secondaire B au moyen de la numérotation des changements de contexte microprocesseur effectuée par la partition de contrôle C. Un écart temporel, correspondant à la différence entre les numéros de contexte courants sur les partitions d'exécution principale A et secondaire B, doit être maintenu inférieur à une valeur prédéterminée, par exemple 50ms. Cet écart est estimé par la différence entre des numéros de changement de contexte. Dans ce cas ce n'est plus vraiment une différence temporelle mais une différence entre des numéros appartenant à deux séquences représentant le même enchaînement d'événements, un évènement étant ici un changement de contexte.

Les étapes d'exécution et de synchronisation sont exécutées en parallèle, c'est-à-dire simultanément.

A chaque changement de contexte, par exemple, l'hyperviseur de la première partition vérifie l'avancement de l'exécution par la machine virtuelle miroir. Si un écart trop important est constaté, c'est-à-dire supérieur à 50ms dans notre exemple, alors l'hyperviseur de la première partition temporise avant de finaliser le changement de contexte, c'est-à-dire avant de permettre à la machine virtuelle de la première partition de poursuivre son exécution.

De manière à garantir un intervalle de temps, on fait en sorte qu'au moins un changement de contexte soit effectué à la fréquence souhaitée. Dans notre exemple on force une interruption matérielle toute les 50ms. Une telle interruption provoque un changement de contexte, ce qui garantit que les moyens pour prévenir un trop grand écart entre les exécutions en miroir sont bien mis en œuvre.

Lorsqu'une défaillance dans un module d'une partition d'exécution est détectée, une étape 2300 de transmission d'un signal d'erreur catastrophique à la partition de contrôle C se produit. Deux cas se présentent alors selon que la défaillance survient dans :
- la partition d'exécution principale A (Fig.2 2310), auquel cas une étape 2400 de basculement s'opère, la partition d'exécution secondaire B devenant la nouvelle partition d'exécution principale, puis on passe à une étape 2500 de poursuite de l'exécution ;
- la partition d'exécution secondaire B (Fig.2 2320), auquel cas on passe directement à l'étape 2500 de poursuite de l'exécution.

Ce procédé selon l'invention permet d'augmenter la résilience d'un dispositif à haute disponibilité. Un dispositif à haute disponibilité permettant la mise en œuvre de l'invention est décrit à partir par la suite.

Une architecture matérielle pour la mise en œuvre de l'invention est, par exemple, un système comportant huit modules, chacun des modules étant connecté à tous les autres, on parle de topologie « all-to-all ». D'autres topologies peuvent être employées dès qu'elles offrent plusieurs chemins entre les différents modules. Ce nombre de modules est donner à titre d'exemple et peut varier de deux à plusieurs dizaines.

Chaque port d'interconnexion de chacun des modules doit donc supporter sept liens haute vitesse, chaque lien comportant huit voies bidirectionnelles. Si chaque lien fonctionne à 14 Gb/s, la bande passante entre deux modules quelconques du système est égale à 14 x 8 = 112 Gb/s. Cette fréquence est donnée à titre d'exemple et peut varier dans des proportions notables, jusqu'aux limites technologiques imposées par les connecteurs et les câbles.

Chaque module supporte deux sockets reliés localement par un bus haute vitesse tracé sur leur carte mère. Cette disposition permet de reconfigurer dynamiquement un module pour supporter certaines défaillances de sockets ou de mémoires. On notera pour la suite que les types de défaillances précédentes sont rarement des défaillances brutales, comme par exemple les pannes d'alimentation, et sont précédées pendant une assez longue période de temps par la montée de signaux d'erreur qui indiquent que la fiabilité d'au moins un composant matériel est en train de se dégrader. La gestion appropriée de ces signaux d'erreur est primordiale pour obtenir de bonnes performances en termes de résilience. Ces cartes bi-socket sont équipées de connecteurs haute vitesse à l'interface avec le module d'interconnexion et tous les circuits électriques reliés à ces connecteurs sont capables de supporter les opérations de branchement à chaud. Ceci implique que l'insertion ou la désinsertion d'un module dans la grappe s'effectue sans perturber le fonctionnement des autres modules de cette grappe. En particulier la connexion d'un module non alimenté sur les câbles du module d'interconnexion ne doit pas perturber les différents commutateurs, encore appelés « switches » en anglais, qui fonctionnent sur les sept autres cartes bi-socket. En outre chaque carte bi-socket supporte un microcontrôleur embarqué, appelé BMC pour « Baseboard Management Controller » en anglais, permettant de gérer les fonctions de très bas niveau du serveur comme le poweron/poweroff, la surveillance des températures et des tensions ou encore la reconfiguration dynamique de la grappe de modules.

### Interface de reconfiquration

Pour aider la configuration ou la reconfiguration automatique du système multi-modulaire, un switch Ethernet, appelé MSM pour « Management Switch Module » en anglais, à huit ports est incorporé au module d'interconnexion. Ce commutateur peut être constitué de deux commutateurs de cinq ports, quatre liens descendants et un lien montant, dont les ports des liens montants sont reliés par une trace de circuit imprimé. Cette réalisation améliore encore la résilience du module d'interconnexion en limitant le nombre de cas où les BMC perdent la totalité de leurs moyens de dialogue.

En association avec ce réseau Ethernet privé aux BMC, un dispositif annexe du module d'interconnexion permet d'allouer à chaque BMC un identifiant à partir duquel il va pouvoir calculer son adresse IP. En effet chaque BMC doit pouvoir démarrer sa connexion IP sur ce réseau avec une adresse différente de celle de ses voisins. Ce dispositif annexe basé sur un petit FPGA permet de transmettre à chaque BMC, au moment de l'initialisation, un numéro de port (identifiant sur 3 bits) spécifique à chaque emplacement physique du module relativement au module d'interconnexion. A partir de ces 3 bits, chaque BMC complète son adresse IP avant de se connecter à ses voisins. On notera que, le sous-réseau entre les BMC et le switch MSM étant entièrement privé, les 29 poids forts de l'adresse IP peuvent être identiques pour chaque module.

Pour assurer une bonne résilience vis à vis des pannes d'alimentation électrique, chaque module embarque au moins deux convertisseurs AC-DC, encore appelés PSU pour « Power Supply Unit » en anglais, délivrant la puissance sur le rail, en général sous 12V, en entrée de chaque carte bi-socket. Les PSU peuvent être connectées à deux réseaux AC indépendants pour garantir le fonctionnement du système si l'un de ces réseaux est défaillant. De même, le module MSM est alimenté par plusieurs serveurs : chaque module sous tension envoie à travers son lien Ethernet - MSM un courant sous 12V. Ces différents courants sont sommés par un aiguillage à diodes situé entre les entrées 12V et le POL des circuits du switch Ethernet et du FPGA de reconfiguration.

### Interface de synchronisation

Un autre élément constitutif de l'invention est un réseau d'horloges de synchronisation. Un sous-réseau du module d'interconnexion relie en all-to-all tous les FPGA de tous les modules pour constituer un système de synchronisation quasi-parfait entre les processeurs des différents modules. La logique des FPGA permet, à l'initialisation ou à la reconfiguration de partitionner le réseau d'horloges en autant de sous-réseaux d'horloge qu'il existe de partitions logiques. Dans chaque sous-réseau d'horloges, le processeur maître, en général le processeur qui contient la logique de démarrage, distribue son horloge à tous les processeurs appartenant à sa partition. Le FPGA isole chaque partition logique de telle sorte qu'une partition ne reçoive qu'une et une seule horloge. Cette horloge est un signal carré, dont la fréquence est de quelques mégahertz, par exemple 25MHz. Ce signal peut avantageusement être filtré par un circuit PLL à l'entrée de chaque module pour éliminer tout bruit de phase qui pourrait avoir été introduit par les câbles du module d'interconnexion. Au moment du redémarrage, chaque module démarre un compteur piloté par l'horloge de sa partition. Comme cette horloge est commune aux processeurs de la partition, chacun des processeurs dispose d'une référence de temps synchrone lui permettant de dater, on parle de « time stamp » en anglais, un évènement quelconque qui a lieu dans son module et à tout moment il sera possible de reconstituer la chronologie de plusieurs évènements sans ambiguïté sur leur ordre respectif.

Un exemple d'application est celui de la gestion des signaux d'erreur catastrophique CATERR, pour « catastrophic error » en anglais, qui font partie de l'interface hors bande des modules de calcul. Il s'agit d'un réseau qui n'est pas utilisé pour les tâches de calcul mais uniquement pour l'administration du module. Ces communications n'ont donc pas d'impact sur les performances du module. Ces signaux sont distribués dans les partitions de la même manière que l'horloge décrite précédemment. Quand un signal CATERR se déclenche dans un module, il entraîne en général très rapidement, en quelque microsecondes ou moins, un évènement similaire dans un ou plusieurs des modules adjacents. Le time stamping des évènements CATERR dans chaque module permet aux BMC d'échanger ces mesures et de retrouver quelle est la source du problème et donc leur facilite le diagnostic et la localisation précise du module défaillant.

### Remarques sur l'infrastructure

L'infrastructure est définie par l'ensemble des composants matériels qui fournissent les liaisons physiques entre les modules. Pour garantir la fiabilité de cette infrastructure, il est avantageux d'utiliser un maximum de composants passifs, pour lesquels le temps moyen entre pannes, appelé MTBF pour « Mean Time Between Failures » en anglais, dépasse de plusieurs ordres de grandeur le MTBF des cartes mères des modules. Ainsi, le nombre de cas de pannes créé par cette infrastructure peut être négligé dans l'évaluation de la disponibilité du système. Dans le système qui est décrit, l'infrastructure est composée d'un module d'interconnexion, aussi appelé fond de panier, qui distribue les interfaces des liens haute vitesses, appelées interfaces XQPI, entre les huit modules, et les interfaces Ethernet local et hors bande entre les huit modules et le switch MSM.

Le fond de panier devant supporter des signaux à très haute vitesse, 14 Gb/s aujourd'hui, encore plus dans quelques années, une réalisation par circuit imprimé traditionnel n'a pas été retenue. En effet, même en utilisant des matériaux haut de gamme, comme par exemple le Megtron6 de la Société Panasonic, les pertes d'insertion dépassent 20dB à cette fréquence de données pour les liaisons entre les modules les plus éloignés physiquement les uns des autres. Un autre inconvénient du fond de panier carte concerne la fiabilité mécanique. Etant donné le poids d'un module plein et les tolérances de fabrication d'un châssis et de ses guidages dans l'armoire, la rigidité mécanique d'un tel fond de panier exerce des contraintes mécaniques très élevées sur les connecteurs haute vitesse de l'interface XQPI. Ces contraintes sont une source de défaillance mécanique de l'infrastructure.

Pour éviter ce problème, le fond de panier du système multi-modulaire de l'invention utilise des liaisons sur des câbles de cuivre terminées par des montages de connecteurs flottants qui tolèrent jusqu'à 1 mm de désalignement mécanique en x et y sans exercer de contrainte sur les contacts haute vitesse. Par ailleurs, les pertes d'insertion par unité de longueur sont environ dix fois plus faibles que dans le matériau PCB classique et le nombre de connecteurs et de vias est réduit au strict minimum. Ces éléments participent à l'amélioration de la fiabilité de l'infrastructure et donc à l'objectif de haute disponibilité du système.

L'aspect flottant est obtenu, par exemple, par l'utilisation de guides.

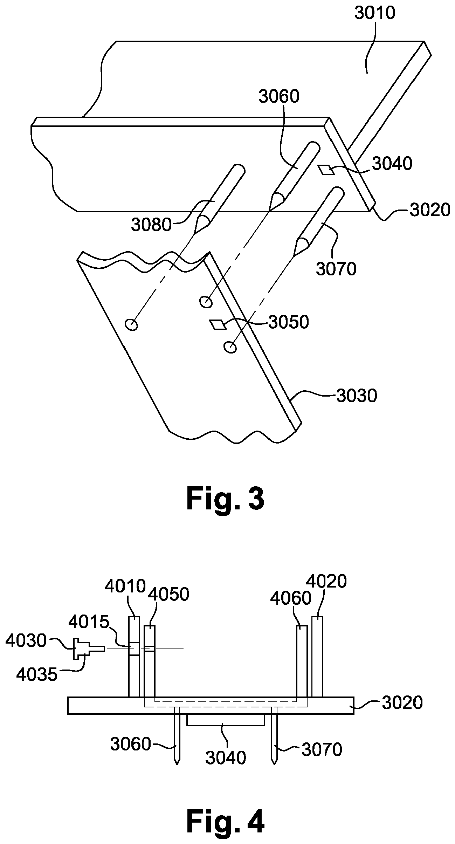

La figure 3 montre qu'un module 3010 de calcul comporte une embase 3020 rigide rectangulaire auquel sont fixés des composants du module ce qui inclut un connecteur 3040 mâle ou femelle de module apte à être connecté un connecteur 3050 femelle ou mâle de châssis d'un châssis 3030 comportant le fond de panier ou bus de fond de panier. Le châssis 3030 n'est ici que partiellement représenté pour illustrer la réalisation. Il est clair pour l'homme du métier que si le module comporte un connecteur mâle, alors châssis comporte un connecteur femelle et vice et versa.

Dans une variante l'embase 3020 est un bord d'une carte à circuit imprimé.

La figure 3, qui ne montre qu'une partie de l'embase du module, montre que l'embase comporte, du côté faisant face au connecteur du châssis :
- un premier guide 3060 et un deuxième guide 3070 situé de part et d'autre du connecteur 3040 de module. Ce placement des guides permet de protéger au moins mécaniquement le connecteur. Le premier guide et le deuxième guide d'un premier type ont sensiblement la même longueur et sont :
   ∘ de forme cylindrique,
   ∘ fixés à l'embase,
   ∘ se terminent en cône de leur côté libre,
   ∘ d'une longueur de quelques centimètres, au moins 1 mais moins de 5.
- un troisième guide 3080 d'un deuxième type qui est :
   o de la même forme que le premier guide,
   o sensiblement plus long que le premier guide, de l'ordre du centimètre, dans la pratique 1 centimètre.
   o situé sur le grand axe central du rectangle formé par l'embase et à quelques centimètre des premier et deuxième guides.

La figure 3 montre aussi que le châssis 3030 comporte des orifices correspondant aux premier, deuxième et troisième guides.

De manière non représenté l'embase comporte au moins un quatrième guide tel que le troisième guide. Ce quatrième guide est symétrique au troisième par rapport au petit axe du rectangle formé par l'embase.

Un grand axe d'un rectangle est une médiatrice d'un petit côté. Un petit axe d'un rectangle est une médiatrice d'un grand côté.

Dans une variante les premier et deuxième guide ont aussi leurs symétriques par rapport au petit axe, l'embase comporte alors six guides. Ces axes sont des axes de symétrie géométrique de l'embase. En générale ces axes correspondent aussi à des axes de symétrique de masses, c'est-à-dire des axes de part et d'autre desquels la masse du dispositif se répartie équitablement. Si ce n'est pas le cas on peut aussi utiliser des axes de masses pour répartir les guides.

Il est clair que le châssis comporte autant d'orifices aptes à coopérer avec des guides que l'embase comporte de guides.

Cet arrangement de guides permet d'effectuer un premier positionnement, ou guidage initial, du module relativement au châssis en utilisant le troisième guide et son symétrique ce qui procure un premier niveau de guidage. Ce premier niveau est un placement relativement au châssis. Puis en poursuivant l'insertion on finit par utiliser les premier et deuxième guides et leurs symétrique ce qui procure un deuxième guidage, final, tout en protégeant les connecteurs.

Dans une variante de l'invention les guides sont rigidement fixés à l'embase.

Cela permet de dire que l'on a un dispositif flottant car les terminaisons coniques des guides permettent un certain jeu.

Cet aspect flottant permet de changer de manière améliorée un module alors que le châssis est en cours d'exploitation. Cet aspect flottant minimise aussi les risques de détérioration lors d'une insertion d'un module dont le poids est supérieur à une dizaine de kilos et qui peut être situé à deux mètres du sol ou au ras du sol dans une armoire.

Cet aspect flottant, indépendamment d'un changement à chaud qu'il fiabilise, permet aussi de fiabiliser une installation hors exploitation en minimisant les risques de détérioration lors d'insertion de modules. Ainsi cet aspect flottant, améliore le remplacement d'un module défaillant après que l'exécution des applications ait été déléguée, selon l'invention, à une autre partition. Mais cet aspect flottant est également intéressant hors contexte de mise en miroir d'application, pour une simple installation.

Dans une autre variante de l'invention le premier guide 3060 et le troisième guide sont fixé de façon flottante à l'embase. Par exemple la figure 4 montre que l'embase 3020 comporte, sur sa face opposée au troisième guide, deux pièces perpendiculaires à l'embase :
- une première pièce 4010 de support de connecteur
- une deuxième pièce 4020 de support de connecteur.

La première pièce de support de connecteur et la deuxième pièce de support de connecteur sont parallèles et comportent au moins un orifice 4015 permettant le passage d'une vis épaulée. Le diamètre de au moins l'orifice 4015 d'un support de connecteur est légèrement supérieur au diamètre d'un épaulement 4035 d'une vis 4030 épaulé utilisée à travers l'orifice. Ainsi une fois fixée, la vis peut jouer dans l'orifice grâce à la différence de diamètre entre l'épaulement et l'orifice. Cette différence de diamètre est dans l'intervalle de 1 à 2 mm.

La figure 4 montre aussi un bloc 4040 connecteur apte à être glissé entre les supports de connecteur. Le bloc connecteur comporte une base sur laquelle sont fixés :
- le premier guide 3060,
- le deuxième guide 3070,
- le connecteur 3040 de module.

Le bloc connecteur comporte aussi une première paroi 4050 et une deuxième paroi 4060 parallèle et telles qu'une fois le bloc connecteur en place les parois sont parallèles aux pièces de support.

La figure 4 montre aussi qu'une paroi du bloc connecteur comporte un orifice taraudé pour obtenir un filetage compatible avec celui de la vis 4030 épaulée. Une fois la vis épaulée vissée, le bloc connecteur est flottant vis-à-vis de l'embase. Cette variante améliore encore l'aspect flottant. Ce flottement dépend de la différence de diamètre entre orifice et épaulement.

Dans une mise en œuvre, chaque pièce de support comporte 4 orifices pour 4 vis épaulées. Les parois comportent alors les 4 orifices taraudés correspondant. Les 4 orifices sont répartis en carré.

Dans une mise en œuvre, chaque pièce de support comporte 3 orifices pour 3 vis épaulées. Les parois comportent alors les 3 orifices taraudés correspondant. Les 3 orifices sont répartis en triangle isocèle ou équilatéral.

Dans une mise en œuvre, chaque pièce de support comporte 2 orifices pour 2 vis épaulées. Les parois comportent alors les 2 orifices taraudés correspondant.

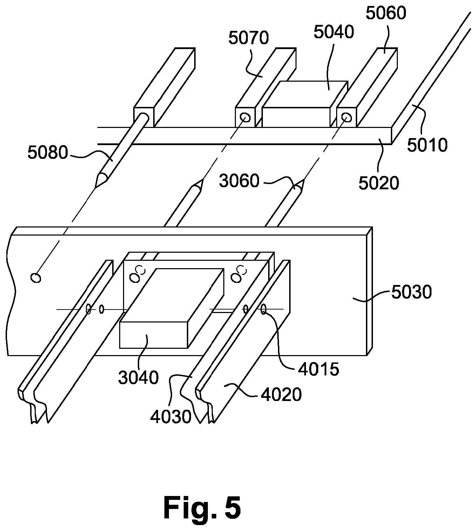

La figure 5, autre variante de l'invention, montre un module 5010 ici assimilable à une carte 5010 mère. L'embase 5020 de la carte 5010 mère est un bord 5020 de la carte 5010 mère.

La figure 5 montre que l'embase 5020 de la carte 5010 comporte un connecteur 5040 et de chaque côté de ce connecteur 5040 se trouve :
- une première pièce 5060 de guidage qui a la forme d'un parallélépipède rectangle évidé d'une forme cylindrique, l'axe du cylindre étant perpendiculaire à l'embase 5020 de la carte 5010 mère ;
- Une deuxième pièce 5070 de guidage identique à la première pièce de guidage.

Dans une variante l'ouverture du cylindre côté embase présente une ouverture tronc conique permettant une meilleur introduction d'un guide cylindrique.

La figure 5 montre également que l'embase de la carte mère comporte un guide 5080 similaire au guide 3080 de l'embase du module.

La figure 5 montre également un châssis 5030 sur lequel est fixé un bloc connecteur tel que celui décrit à la figure 4. Pour la figure 5 on a donc conservé des références identiques, pour des fonctions identiques, à celle de la figure 4.

Ainsi le châssis 5030 comporte, sur sa face opposée à celle en vis-à-vis de la carte mère, deux pièces perpendiculaires à la carte mère, une fois la carte mère en place :
- une première pièce 4010 de support de connecteur
- une deuxième pièce 4020 de support de connecteur.

La première pièce de support de connecteur et la deuxième pièce de support de connecteur sont parallèles et comportent au moins un orifice 4015 permettant le passage d'une vis épaulée. Le diamètre de au moins l'orifice 4015 d'un support de connecteur est légèrement supérieur au diamètre d'un épaulement 4035 d'une vis 4030 épaulé utilisée à travers l'orifice. Ainsi une fois fixée, la vis peut jouer dans l'orifice grâce à la différence de diamètre entre l'épaulement et l'orifice. Cette différence de diamètre est dans l'intervalle de 1 à 2 mm

Ainsi pourvu, le châssis est donc apte à recevoir un bloc connecteur qui sera alors flottant.

Les figures 3 à 5 illustrent plusieurs modes de réalisations pour un une connexion flottante entre un module et un châssis.

Le switch MSM de l'invention, qui comporte quelques éléments actifs, fait partie de l'infrastructure. Il a été vu précédemment que ses alimentations sont fortement redondantes. En outre, la puissance dissipée très basse, de l'ordre 2 à 3 watts, et le faible nombre de composants permettent de prédire un MTBF de plusieurs millions d'heures pour le module MSM. Pour terminer, il est à noter que le fonctionnement du switch MSM est monitoré par les huit BMC des modules et que, si une défaillance du MSM est détectée, le remplacement à chaud de ce module n'interrompt pas le fonctionnement du système multi-modulaire. On peut dire que l'impact du MSM sur le taux de disponibilité du système est encore négligeable, tant que l'échange physique du module intervient dans les délais habituels.

On s'intéresse maintenant à la description des différents composants logiciels utilisés par l'invention.

### Configuration en octo-module

On considère que la configuration à huit modules décrite précédemment est destinée à supporter un système en redondance 1+1, où chaque processeur d'une partition possède un processeur redondant dans une autre partition. Cette configuration est la plus simple à décrire mais pour des raisons de sécurité, une configuration en redondance 1+2 ou 1+3, où chaque processeur d'une partition possède respectivement deux ou trois processeurs redondants dans respectivement deux ou trois autres partitions, peut être utilisée.

Lors d'une étape de configuration (E1) de la pluralité de modules en une pluralité de partitions, trois modules sont attribués à une partition A, partition de premier plan. Par conséquent une partition B, partition de second plan, est également constituée avec trois modules. Les deux modules restant de la configuration à huit modules sont affectés à une partition C, partition de contrôle, dont un des modules supporte les journaux d'exécution des partitions A et B. Le second module de la partition C peut temporairement remplacer n'importe quel autre module défaillant, suivant le taux de disponibilité exigé.

La partition C peut exécuter optionnellement des applications non-critiques, à condition qu'on définisse les priorités de ces applications bien au-dessous des priorités des modules logiciels qui assurent les fonctions de haute disponibilité pour les applications s'exécutant dans les partitions A et B.

La charge des applications critiques représente dans ce cas 37,5% de la puissance de traitement installée, soit trois modules sur un total de huit.

Pour une configuration quadri-modules, la partition A et la partition B contiennent chacune un seul module et la partition C en contient deux. Dans ce cas la charge des applications critiques ne représente plus que 25% de la puissance de traitement installée.

### Exploitation de l'architecture

Cette invention n'utilise que des OS tournant sur un cœur unique. En effet, bien que l'on sache réaliser des noyaux d'OS s'exécutant sur des processeurs multi-cœurs, la mise en œuvre de tels noyaux dans cette invention peut entraîner des problèmes insolubles de synchronisation des processus. Ceci ne signifie pas que le processeur physique est un processeur mono-cœur. L'usage des processeurs multi-cœurs est seulement contraint par l'allocation des ressources physiques assurées par la couche d'hypervision, selon laquelle un OS donné ne reçoit qu'un cœur et un seul. Rien n'interdit par ailleurs que le même cœur soit attribué à plusieurs OS distincts. Dans ce dernier cas, seules les performances ou les temps de réponse peuvent être affectés. Dans la description qui suit on suppose la règle simple : 1 cœur = 1 OS. Bien entendu, sous chaque OS, les utilisateurs sont libres de faire tourner autant d'applications simultanées qu'ils le souhaitent. La charge de calcul qui est générée par ces applications est multiplexée de façon classique par l'ordonnanceur, appelé « scheduler » en anglais, du noyau de l'OS. Plus la charge est élevée, plus les performances sont faibles.

Pour assurer le scheduling des processus, chaque OS gère une file d'attente des processus prêts à s'exécuter, appelés « process ready » en anglais. Seul le premier processus de cette file d'attente reçoit le processeur et donc se trouve dans un sous-état dit d'exécution, ou « running » en anglais. Quand le processus running rencontre un sémaphore de synchronisation de type bloquant, appelé P-Op, il quitte la file d'attente des processus ready et passe dans un état d'attente, ou « waiting » en anglais, jusqu'à ce qu'un autre processus ou bien un gestionnaire d'interruption d'entrées-sorties vienne le débloquer par une opération de type V-Op sur le même sémaphore. A ce moment, le processus est à nouveau inséré dans la file des processus ready en fonction de règles de priorité qui dépendent de l'OS et de sa configuration. On se place ici dans l'hypothèse d'une mise en queue dans un mode appelé 'insertion par priorité'. Ce point signifie que la file d'attente en question est constituée par plusieurs sous-listes, une sous liste par niveau de priorité, les sous listes étant chaînées et classées entre elles en fonction de leur priorité. Insérer par priorité signifie que le nouvel élément est inséré à la fin de la sous liste associée à la priorité de ce nouvel élément. Si cette sous-liste n'existe pas, la nouvelle entrée est insérée à la fin de la première sous-liste présente et de priorité plus élevée, ou en tête de liste si la sous-liste en question n'existe pas. Ce type d'opération effectuée régulièrement par le noyau est souvent appelée opération de dispatching (répartition) ou en abrégé un dispatch (répartition).

Avec un tel noyau de synchronisation des processus, noyau qui est devenu classique de nos jours, l'exécution sur un cœur est constituée par une succession de séries d'instructions séparées par des opérations de dispatching exécutées par le module, unique dans l'OS, de synchronisation des processus. Si deux OS identiques, exécutant les mêmes processus (mêmes codes, mêmes données, sur des processeurs identiques), s'exécutent en parallèle en se synchronisant au moment des opérations de dispatching, les états des deux OS et par conséquent les résultats obtenus en sortie des deux OS seront rigoureusement identiques d'un point de vue logique. Par contre, l'exécution du point de vue physique peut différer de l'exécution du point de vue logique.

### Exécution du point de vue physique

Dans ce qui suit, on décrit la façon dont les schedulers de deux noyaux s'exécutant en parallèle sur la partition A et sur la partition B peuvent rester en synchronisation parfaite.

Quand un programme s'exécute sur un ordinateur classique, la logique, au sens mathématique du terme, de ce programme se doit d'être exécutée de manière déterministe. Cela signifie que le programmeur s'attend à ce que deux exécutions successives du même programme sur le même jeu de données conduisent toujours exactement aux mêmes résultats. En réalité ce n'est qu'une apparence car en arrière- plan, entre deux exécutions logiques, des évènements divers peuvent venir s'entrelacer au milieu du programme et complètement modifier son timing d'exécution. Les principaux évènements pouvant se produire sont : les interruptions, les dispatchs allouant le processeur à une autre tâche, ou « thread » en anglais, suite à une V-Op réveillant un thread plus prioritaire, les erreurs récupérables en lecture de la mémoire centrale ou pendant le transfert des données sur les bus d'entrées-sorties. Cette liste n'est pas exhaustive. Dans tous les cas on peut dire que les opérations de gestion (scheduling, erreurs, etc...) sont invisibles du programme considéré, sauf en ce qui concerne son timing. C'est donc le timing d'exécution qui introduit la notion d'exécution du point de vue physique du programme en ajoutant la composante temporelle la plus fine de la description. Si aucune précaution n'est prise, lancer plusieurs programmes en parallèle sous un OS ne garantit aucunement l'ordre dans lequel vont s'effectuer les opérations. Il peut donc y avoir rapidement un très grand décalage temporel entre un programme s'exécutant sur la partition A et le même programme s'exécutant sur la partition B, même s'ils ont démarré sur le même top d'horloge. La présente invention montre que l'organisation convenable des points de synchronisation des threads dans un système multi-modulaire permet de garantir que les exécutions physiques entre deux partitions peuvent rester synchrones à l'intérieur d'un intervalle de temps déterminé à l'avance, par exemple 50ms. Comme les interruptions peuvent en général être suivies du lancement d'un thread, et que ce lancement s'effectue à travers le dispatcher du noyau de l'OS, il est possible de borner la désynchronisation entre les partitions A et B en introduisant artificiellement des interruptions engendrées par un timer hardware. Ce timer est généralement disponible parmi les ressources du chipset et l'hyperviseur peut l'initialiser pour créer un dispatch à une fréquence donnée, par exemple 20Hz si on souhaite que la désynchronisation ne dépasse pas 50 ms. Il faut garder en mémoire que sur un processeur moderne, le temps de changement de contexte est de l'ordre de 1µs. Grâce à cette caractéristique, forcer un dispatch toutes les 50ms n'a aucun effet visible sur les performances. Il en serait tout autrement si on souhaitait synchroniser les threads à 5 ou 10µs près.

### Synchronisation entre 2 VM

Pour distinguer le cas des VM qui tournent dans la même partition A ou B et celui de deux VM dont l'une tourne sur A et l'autre sur B, on nomme cette dernière situation 'VM non-cohérentes' pour rappeler que les mémoires de A et de B sont non-cohérentes au sens de l'interface inter-modules XQPI.

Afin de mieux appréhender les avantages apportés par l'invention, il est intéressant d'examiner quelques cas de défaillances brutales et les réactions du système selon l'invention associées.

Les convertisseurs VRM, pour « Voltage Regulator Module » en anglais, sont les convertisseurs POL des processeurs ou des mémoires DRAM. Quand un tel VRM défaille, les circuits associés stoppent leur activité au bout de quelques microsecondes car un détecteur de présence tension, au moins, fait basculer le signal PWRGOOD, ce qui provoque l'arrêt de la logique et la montée du signal CATERR. Le signal CATERR est transmis par le module d'interconnexion à tous les modules de la partition. En réception, CATERR bloque tous les processeurs connectés et le processeur de maintenance, le BMC, lance des procédures pour gérer la défaillance.

L'arrêt de toutes les transactions avec les fonctions de synchronisation est détecté au plus tard en 50ms. La partition B termine l'exécution de ses threads jusqu'à ce point de synchronisation. Puis, comme la défaillance de la partition A est constatée par la fonction de synchronisation, cette dernière libère les threads de la partition B en simulant une V-Op qui permet à ces threads de poursuivre leur exécution.

Une erreur fatale en mémoire est un type d'erreur assez fréquent car le nombre de transistors qui constituent la mémoire centrale peut dépasser de deux ordres de grandeur celui des processeurs et des caches. Dans la terminologie Intel, l'architecture de management de ces erreurs se nomme MCA pour « Machine Check Architecture » en anglais. Une erreur est dite de type hard si une cellule mémoire est définitivement collée à 0 ou à 1. Une erreur est dite de type soft si le contenu de la cellule a été altéré mais que le fonctionnement de cette cellule reste acquis.

Dans l'architecture MCA, une erreur fatale en mémoire conduit sans alternative au vidage de la mémoire, appelé « crashdump » en anglais, de l'OS ou de l'hyperviseur. Le redémarrage est donc nécessairement très long, plusieurs minutes en général.

En utilisant l'invention, la fonction de crashdump est précédée de la fonction de basculement qui assure en moins de 50ms le basculement entre la partition A et la partition B.

Comme un grand nombre d'erreurs fatales en mémoire ne sont pas des erreurs de type hard mais des erreurs de type soft suite à un basculement d'exécution, il est possible de redémarrer la partition A, puis de faire migrer progressivement les OS et applications de la partition B vers la partition A, jusqu'à ce que les fonctions de synchronisation de la partition C puissent effectivement être réactivées. Arrivé à ce stade, le système est redevenu redondant en 1+1 et comme il est totalement symétrique, il n'est pas indispensable de rebasculer la partition A en mode principal. Il suffit de déclarer que la partition B est devenue la partition principale et que la partition A est devenue la partition miroir.

La bande passant du bus XQPI étant importante, plus de 10Go/s avec les technologies courantes, migrer une mémoire centrale de 1To va prendre mécaniquement au moins 1000G/10G = 100 secondes. Ce transfert est avantageusement piloté par un module logiciel résidant dans la partition C. C'est l'ordre de grandeur de temps pendant lequel le système ne sera pas totalement redondant, mais il aura assuré la reprise du service en moins de 50ms. Le taux de défaillance critique est alors lié à la probabilité d'une seconde erreur fatale pendant cet intervalle de 100s. Par exemple, en supposant une technologie conduisant à un taux d'erreurs fatales de 1 pour 10¹⁸ bit lus et une mémoire lue avec un débit de 1000Gb/s, le système aurait un intervalle moyen entre deux défaillances de l'ordre de 10⁶s, soit presque 300 heures. En réalité, il faut se méfier de ce type de statistiques car le processus de lecture mémoire ne possède pas les caractéristiques de stationnarité des variables aléatoires classiques. Les erreurs mémoires fatales peuvent être entièrement dues à une seule cellule défaillante qui serait accédée très fréquemment par un OS ou une application particulière. Ceci posé, avec les hypothèses ci-dessus et sachant qu'en moyenne il se produit une erreur fatale toutes les 10⁶s, le taux de défaillance critique du système est donné par la probabilité d'occurrence d'une seconde erreur fatale en 100s, soit 1/10000. Et le MTBF serait alors de l'ordre de 3M d'heures, ou 340 ans. Si ce taux de défaillance est jugé trop élevé, il sera nécessaire de passer à un schéma de redondance en 1+2 ou 1+3, c'est-à-dire de maintenir synchronisées plus de deux machines.

Une erreur fatale en entrée-sortie de disque est également un type d'erreur assez fréquent car les causes d'erreur sur les dispositifs de stockage sont très nombreuses.

Le sous-système de stockage du système selon l'invention est supposé en mode RAID1, c'est à dire que tout fichier écrit sur un disque attaché à la partition A dispose d'un fichier miroir sur un disque attaché à la partition B.

Une erreur fatale dans ce domaine peut être due à un bloc de disque dont le contenu a été écrasé de manière incohérente par une défaillance quelconque. L'erreur est détectée par un mauvais code correcteur d'erreur au moment de la lecture de ce bloc et cette erreur est remontée au gestionnaire d'entrées-sorties par les messages du bus PCIe correspondant au canal du disque en défaut.

Dans ce cas, le fichier entier est inaccessible pour le programme qui cherche à faire des entrées-sorties sur ce disque et généralement l'OS termine l'application en la passant dans un état suspendu. Comme le programme miroir n'a pas reçu en direct la notification de l'erreur puisqu'il s'exécute dans la partition B, la fonction de synchronisation est en mesure de lancer la récupération du fichier après avoir, pendant un moment donné la main au programme miroir en simulant les V-Ops de synchronisation.

Les algorithmes permettant cette reprise à chaud sont connus et utilisés dans tous les contrôleurs RAID du marché. Ici, les fonctions firmware des contrôleurs RAID sont remplacées par une ou plusieurs fonctions software qui s'exécutent dans la partition C. Ces fonctions mettent en œuvre des journaux d'événements qui assurent l'intégrité des systèmes de fichiers.

L'avantage de l'invention est ici encore de pouvoir garantir que le programme reprend son activité normale en moins de 50 ms.

## Revendications

1. Procédé d'exécution synchronisée d'une application dans un environnement à haute disponibilité comportant une pluralité de modules de calcul interconnectés par un réseau à très haut débit, **caractérisé en ce qu'**il comporte les étapes suivantes :
- configuration (2000) de la pluralité de modules en une pluralité de partitions dont au moins :
∘ deux partitions d'exécution comportant des nœuds identiques en nombre et en caractéristiques, une partition d'exécution principale, et une partition d'exécution secondaire ;
o une partition de contrôle comportant au moins un module ;
- exécution (2100) de l'application sur chaque partition d'exécution, des entrées-sorties traitées par la partition principale étant transmises à la partition d'exécution secondaire via la partition de contrôle qui journalise ces entrées-sorties comme des transactions distribuées entre la partition d'exécution principale et la partition d'exécution secondaire,
- synchronisation (2200) des exécutions sur la partition principale et sur la partition secondaire par la numérotation des changements de contexte microprocesseur sur la partition principale et sur la partition secondaire, un écart temporel correspondant à la différence entre les numéros de contexte courants, sur les partitions d'exécution principale et secondaire, devant être inférieur à une valeur donnée ;
- transmission (2300) d'un signal d'erreur catastrophique à la partition de contrôle, ledit signal étant caractéristique d'une défaillance dans un module d'une partition d'exécution ;
- poursuite (2500) de l'exécution en passant dans un mode dit mode dégradé, l'exécution continuant sur une seule partition, et dans le cas d'une défaillance d'un module de la partition d'exécution principale, opération de basculement (2400), la partition d'exécution secondaire devenant la nouvelle partition d'exécution principale.

2. Procédé d'exécution synchronisée selon la revendication 1, **caractérisé en ce que** l'on force une interruption à une fréquence prédéterminée, pour forcer un changement de contexte microprocesseur et ainsi procéder à une synchronisation (2200).

3. Procédé selon la revendication 2, **caractérisé en ce que** la fréquence prédéterminée est de l'ordre de 20Hz, la désynchronisation étant ainsi bornée à 50ms.

4. Procédé selon l'une des revendications précédentes, **caractérisé en ce que** l'application est virtualisée via un hyperviseur.

5. Procédé selon la revendication 4, **caractérisé en ce que** les machines virtuelles sont identiques sur la partition d'exécution principale et sur la partition d'exécution secondaire, les machines virtuelles s'exécutant sur un seul cœur de processeur.

6. Procédé selon l'une des revendications précédentes, **caractérisé en ce que** l'étape de configuration (2000) de la pluralité de modules en une pluralité de partitions s'effectue de manière dynamique, sans arrêt de service de l'environnement.

7. Procédé selon l'une des revendications précédentes, **caractérisé en ce que** l'indisponibilité apparente de l'environnement est égale à la désynchronisation entre l'exécution de l'application sur les partitions principale et secondaire, l'indisponibilité étant donc bornée par la synchronisation (2200) des exécutions.

8. Dispositif de stockage numérique comportant un fichier correspondant à des codes instructions qui lorsqu'ils sont exécutés par un ordinateur exécutent le
procédé selon l'une des revendications précédentes.

9. Dispositif configuré pour l'exécution du procédé selon l'une des revendications 1 à 7.

10. Dispositif selon la revendication 9 comportant une pluralité de modules 3010 insérés dans un châssis 3030 **caractérisé en ce qu'**une embase 3020 d'un module comporte des guides d'insertion (3060,3070) fixés à l'embase, ces guides étant de deux types :
- un premier type (3060), pour assurer un guidage final et une protection d'un connecteur de l'embase,
- un deuxième type (3070) ayant une forme cylindrique terminée par un cône pour assurer un guidage initial.
chaque guide ayant un moyen correspondant dans le châssis.

11. Dispositif selon la revendication 10, **caractérisé en ce que** le premier type a une forme cylindrique terminé par un cône, sa longueur étant inférieure à celle du deuxième type de l'ordre du centimètre.

12. Dispositif selon la revendication 10, **caractérisé en ce que** le premier type est une pièce évidée apte à coopérer avec une forme cylindrique terminée par un cône.

13. Dispositif selon l'une des revendications 10 à 12 **caractérisé en ce qu'**au moins 1 guide du deuxième type est rigidement fixé à l'embase.

14. Dispositif selon l'une des revendications 11 ou 13, **caractérisé en ce que** au moins un guide du premier type est fixé de façon flottante à l'embase.

15. Dispositif selon l'une des revendications 12 ou 13, **caractérisé en ce que** au moins un guide cylindrique coopérant avec le guide du premier type est fixé de façon flottante au châssis.

16. Dispositif selon l'une des revendications 10 à 15, **caractérisé en ce que** l'embase comporte quatre guides du premier type et deux guides du deuxième type.

17. Dispositif selon l'une des revendications 10 à 16, **caractérisé en ce que** les guides sont répartis symétriquement par rapport à des axes de symétrie de l'embase.

## Patentansprüche

1. Verfahren zur synchronisierten Ausführung einer Anwendung in einer Umgebung mit hoher Verfügbarkeit, umfassend eine Vielzahl von Rechenmodulen, die durch ein Hochgeschwindigkeitsnetzwerk miteinander verbunden sind, **dadurch gekennzeichnet, dass** es die folgenden Schritte umfasst:
- Konfiguration (2000) der Vielzahl von Modulen in eine Vielzahl von Partitionen, einschließlich mindestens:
∘ zwei Ausführungspartitionen mit Knoten, die in Anzahl und Merkmalen identisch sind, eine primäre Ausführungspartition und eine sekundäre Ausführungspartition;
∘ eine Steuerpartition mit mindestens einem Modul;
- Ausführung (2100) der Anwendung auf jeder Ausführungspartition, wobei von der primären Partition verarbeitete Eingaben/Ausgaben über die Steuerpartition an die sekundäre Ausführungspartition übertragen werden, die diese Eingaben/Ausgaben als verteilte Transaktionen zwischen der primären Ausführungspartition und der sekundären Ausführung protokolliert,
- Synchronisation (2200) der Ausführungen auf der primären Partition und auf der sekundären Partition durch die Nummerierung der Kontextänderungen des Mikroprozessors auf der primären Partition und auf der sekundären Partition, wobei eine Zeitdifferenz, die der Differenz zwischen den aktuellen Kontextnummern entspricht, auf der primären und sekundären Ausführungspartition kleiner als ein gegebener Wert sein muss;
- Übertragung (2300) eines katastrophalen Fehlersignals an die Steuerpartition, wobei das Signal für einen Fehler in einem Modul einer Ausführungspartition kennzeichnend ist;
- Fortsetzung (2500) der Ausführung durch Wechsel in einen sogenannten Degraded Mode, wobei die Ausführung auf einer einzelnen Partition fortgesetzt wird, und bei Ausfall eines Moduls der primären Ausführungspartition Umschaltvorgang (2400), wobei die sekundäre Ausführungspartition die neue primäre Ausführungspartition wird.

2. Synchronisiertes Ausführungsverfahren nach Anspruch 1, **dadurch gekennzeichnet, dass** ein Interrupt mit einer vorbestimmten Frequenz erzwungen wird, um eine Änderung des Mikroprozessorkontexts zu erzwingen und somit eine Synchronisation durchzuführen (2200).

3. Verfahren nach Anspruch 2, **dadurch gekennzeichnet, dass** die vorbestimmte Frequenz in der Größenordnung von 20 Hz liegt, wodurch die Desynchronisation auf 50 ms begrenzt wird.

4. Verfahren nach einem der vorstehenden Ansprüche, **dadurch gekennzeichnet, dass** die Anwendung über einen Hypervisor virtualisiert wird.

5. Verfahren nach Anspruch 4, **dadurch gekennzeichnet, dass** die virtuellen Maschinen auf der primären Ausführungspartition und auf der sekundären Ausführungspartition identisch sind, wobei die virtuellen Maschinen auf einem einzigen Prozessorkern laufen.

6. Verfahren nach einem der vorstehenden Ansprüche, **dadurch gekennzeichnet, dass** der Schritt des Konfigurierens (2000) der Vielzahl von Modulen in eine Vielzahl von Partitionen dynamisch ausgeführt wird, ohne den Dienst der Umgebung zu unterbrechen.

7. Verfahren nach einem der vorstehenden Ansprüche, **dadurch gekennzeichnet, dass** die scheinbare Nichtverfügbarkeit der Umgebung gleich der Desynchronisation zwischen der Ausführung der Anwendung auf der primären und der sekundären Partition ist, wobei die Nichtverfügbarkeit daher durch die Synchronisation (2200) von Ausführungen begrenzt wird.

8. Digitale Speichervorrichtung umfassend eine Datei, die Befehlscodes entspricht, die, wenn sie von einem Computer ausgeführt werden, das Verfahren nach einem der vorstehenden Ansprüche ausführen.

9. Vorrichtung zur Durchführung des Verfahrens nach einem der Ansprüche 1 bis 7.

10. Vorrichtung nach Anspruch 9, umfassend eine Vielzahl von Modulen 3010, die in einen Rahmen 3030 eingesetzt sind, **dadurch gekennzeichnet, dass** eine Basis 3020 eines Moduls Führungseinheiten (3060, 3070) umfasst, die an der Basis befestigt sind, wobei diese Führungen zwei Typen sind:
- ein erster Typ (3060), um die Endführung und den Schutz eines Verbinders der Basis zu gewährleisten,
- ein zweiter Typ (3070) mit einer zylindrischen Form, die von einem Kegel abgeschlossen wird, um eine Anfangsführung bereitzustellen.
wobei jede Führung ein entsprechendes Mittel im Rahmen aufweist.

11. Vorrichtung nach Anspruch 10, **dadurch gekennzeichnet, dass** der erste Typ eine zylindrische Form aufweist, die in einem Kegel endet, wobei seine Länge um einen Zentimeter geringer ist als die des zweiten Typs.

12. Vorrichtung nach Anspruch 10, **dadurch gekennzeichnet, dass** der erste Typ
ein ausgespartes Teil ist, das mit einer zylindrischen Form, die von einem Kegel abgeschlossen wird, zusammenwirken kann.

13. Vorrichtung nach einem der Ansprüche 10 bis 12, **dadurch gekennzeichnet, dass** mindestens 1 Führung des zweiten Typs fest an der Basis befestigt ist.

14. Vorrichtung nach einem der Ansprüche 11 oder 13, **dadurch gekennzeichnet, dass** mindestens eine Führung des ersten Typs beweglich an der Basis befestigt ist.

15. Vorrichtung nach einem der Ansprüche 12 oder 13, **dadurch gekennzeichnet, dass** mindestens eine zylindrische Führung, die mit der Führung des ersten Typs zusammenwirkt, beweglich an dem Rahmen befestigt ist.

16. Vorrichtung nach einem der Ansprüche 10 bis 15, **dadurch gekennzeichnet, dass** die Basis vier Führungen des ersten Typs und zwei Führungen des zweiten Typs umfasst.

17. Vorrichtung nach einem der Ansprüche 10 bis 16, **dadurch gekennzeichnet, dass** die Führungen symmetrisch zu Symmetrieachsen der Basis verteilt sind.

## Claims

1. A method of synchronized execution of an application in a high-availability environment comprising a plurality of computation modules interconnected by a very high-speed network, **characterized in that** it comprises the following steps:
- configuring (2000) the several modules as a plurality of partitions consisting of at least:
∘ two execution partitions comprising nodes that are identical in number and characteristics, a main execution partition and a secondary execution partition;
∘ a control partition comprising at least one module;
- executing (2100) the application on each execution partition, inputs-outputs processed by the main partition being transmitted to the secondary execution partition via the control partition that logs these inputs-outputs as transactions distributed between the main execution partition and the secondary execution partition,
- synchronizing (2200) executions on the main partition and on the secondary partition by numbering changes of microprocessor context on the main partition and on the secondary partition, a time difference corresponding to the difference between the current context numbers, on the main and secondary execution partitions, which must be less than a given value;
- transmitting (2300) a catastrophic error signal to the control partition, said signal being characteristic of a failure in a module of an execution partition;
- continuing (2500) the execution by changing over to a mode called degraded mode, the execution continuing on a single partition, and in the event of a failure of a module of the main execution partition, failover operation (2400), the secondary execution partition becoming the new main execution partition.

2. The method of synchronized execution according to Claim 1, **characterized in that** an interrupt is forced at a predetermined frequency, in order to force a change of microprocessor context and thus proceed with synchronization (2200).

3. The method according to Claim 2, **characterized in that** the predetermined frequency is of the order of 20 Hz, the desynchronization thus being limited to 50 ms.

4. The method according to one of the preceding Claims, **characterized in that** the application is virtualized via a hypervisor.

5. The method according to Claim 4, **characterized in that** the virtual machines are identical on the main execution partition and on the secondary execution partition, the virtual machines being executed on a single processor core.

6. The method according to one of the preceding Claims, **characterized in that** the configuration step (2000) of the plurality of modules as a plurality of partitions is carried out dynamically, with no service stop of the environment.

7. The method according to one of the preceding Claims, **characterized in that** the apparent unavailability of the environment is equal to the desynchronization between the execution of the application on the main and secondary partitions, the unavailability therefore being limited by the synchronization (2200) of the executions.

8. A digital storage device comprising a file corresponding to instruction codes which, when executed by a computer, execute the method according to one of the preceding Claims.

9. A device configured for the execution of the method according to one of Claims 1 to 7.

10. The device according to Claim 9, comprising a plurality of modules 3010, inserted into a chassis 3030, **characterized in that** a socket 3020 of a module comprises insertion guides (3060, 3070) fixed to the socket, these guides being of two types:
- a first type (3060), to ensure final guidance and protection of a connector of the socket,
- a second type (3070) having a cylindrical shape ending in a cone to ensure initial guidance.
each guide having a corresponding means in the chassis.

11. The device according to Claim 10, **characterized in that** the first type has a cylindrical shape ending in a cone, the length thereof being less than that of the second type of the order of a centimeter.

12. The device according to Claim 10, **characterized in that** the first type is a recessed part capable of cooperating with a cylindrical shape ending in a cone.

13. The device according to one of Claims 10 to 12, **characterized in that** at least 1 guide of the second type is rigidly fixed to the socket.

14. The device according to one of Claims 11 or 13, **characterized in that** at least one guide of the first type is fixed floatingly to the socket.

15. The device according to one of Claims 12 or 13, **characterized in that** at least one cylindrical guide cooperating with the guide of the first type is fixed floatingly to the chassis.

16. The device according to one of Claims 10 to 15, **characterized in that** the socket comprises four guides of the first type and two guides of the second type.

17. The device according to one of Claims 10 to 16, **characterized in that** the guides are distributed symmetrically relative to the axes of symmetry of the socket.
